# FASCICULE DE BREVET EUROPEEN

(11) **EP 1 497 788 B1**
(45) Date de publication et mention de la délivrance du brevet: **12.12.2012**
(21) Numéro de dépôt: 03710161.5
(22) Date de dépôt: 11.04.2003
(51) Int. Cl.: G06K 19/07, G06K 7/00

(54) **DISPOSITIF DE COMMANDE A DISTANCE**
FERNBEDIENUNGSVORRICHTUNG
REMOTE CONTROL DEVICE

(30) Priorité: 19.04.2002 FR 0204961
(43) Date de publication de la demande: 19.01.2005
(73) Titulaire: SIMU, 70100 Gray (FR)
(72) Inventeur: CARVALHEIRO, Emmanuel, F-70100 ARC-LES-GRAY (FR)
(74) Mandataire: Bugnion Genève
(86) Numéro de dépôt international: PCT/IB2003/001439
(87) Numéro de publication internationale: WO 2003/090159

(56) Documents cités:
- DE-A1- 19 711 788
- FR-A1- 2 755 925
- US-A- 4 893 118
- US-A- 5 721 535
- US-A- 6 105 860

## Description

La présente invention se rapporte au domaine de la commande sécurisée par proximité et sans contact galvanique entre un dispositif émetteur d'ordres de type nomade et un dispositif récepteur d'ordres fixe commandant un actionneur destiné par exemple à l'ouverture d'un moyen de protection d'une zone protégée ou d'un bâtiment. L'invention concerne en particulier un émetteur d'ordres défini selon le préambule de la revendication 1, un récepteur d'ordres défini selon le préambule de la revendication 4 et un dispositif de commande et/ou de configuration d'équipement selon le préambule de la revendication 7.

L'invention se rapporte à des fonctionnements particuliers, nécessitant d'avoir la certitude que le porteur du dispositif émetteur d'ordres de type nomade se trouve à proximité immédiate d'un point déterminé pour valider une commande. Un tel fonctionnement concerne principalement la manoeuvre de certains moyens de fermeture pour lesquels la réglementation impose que l'ensemble des mouvements se fasse sous contrôle visuel de l'utilisateur. Il s'agit par exemple de grilles placées sur chaque voie d'entrée à un magasin. La commande doit alors être de type « homme-mort », c'est-à-dire qu'elle doit s'interrompre si l'ordre n'est pas maintenu ou si l'utilisateur s'écarte du périmètre défini. Les solutions les plus simples utilisent des interrupteurs à contact intermittent, pouvant être commandés par une clé de sécurité. Les solutions de contrôle d'accès utilisent la lecture de badges, de cartes ou de clés électroniques ou magnétiques, ou encore d'empreintes digitales.

Ces serrures, ces lecteurs de cartes ou d'empreintes sont des cibles faciles pour les vandales. Ceci conduit aujourd'hui à préférer des solutions ne nécessitant aucun élément apparent en particulier aucun contact, aucun lecteur optique, et ne nécessitant aucune intervention mécanique.

Une solution connue consiste à utiliser un système émetteur récepteur dans lequel, on réduit volontairement la puissance de l'émetteur afin de réduire sa portée. Une telle réalisation est obtenue notamment en utilisant une fréquence de transmission comprise dans le domaine 100-300 KHz. Il faut donc réaliser des émetteurs et des récepteurs spécifiques permettant la transmission et la réception d'un signal de commande dans cette gamme de fréquences.

Un inconvénient d'usage de fréquences aussi basses est qu'il limite le débit de transmission de données, donc le nombre de bits transmissibles dans un temps donné. Or, les applications de sécurité, telles que l'ouverture d'une grille de magasin, nécessitent des codes d'identification de plus en plus complexes, par exemple codés sur 64 bits, à transmettre en plus des codes de commande proprement dits.

Dans ce domaine de fréquences, on a particulièrement développé la technologie des transpondeurs RFID (radio frequency identification device). Ils présentent en particulier l'avantage de pouvoir alimenter à courte distance un dispositif portable par l'intermédiaire d'une transmission HF. Le dispositif portable comporte en général un circuit résonnant pouvant être mis en court-circuit selon une séquence reproduisant l'état de données binaires constituant le code d'identification. Le fait que le circuit résonnant soit ou non activé a une incidence sur la consommation de l'émetteur HF, lequel peut ainsi connaître le contenu du code inclus dans le dispositif portable. Un tel fonctionnement est par exemple décrit dans US 4,546,241 ou US 4,893,118. De nouveau, on notera que ce genre de système est appliqué à des procédés dans lesquels un délai d'une seconde nécessaire à l'identification de l'ordre n'est pas un problème. Cependant dans le cas de procédés s'appliquant à des commandes de type « homme-mort » le temps de réaction doit être dix fois plus rapide.

On connaît également dans ce domaine de l'étiquetage électronique RFID, le brevet US 6,105,860 décrivant une installation comprenant un dispositif de stockage de données (étiquette électronique) et un dispositif d'acquisition de données (scanner). Le dispositif d'acquisition de données comprend un circuit d'émission d'ondes électromagnétiques et le dispositif de stockage de données un circuit de réception de ces ondes et de transformation de celles-ci en un courant continu alimentant entre autres des moyens de génération et d'émission de signaux électromagnétiques.

Le but de l'invention est de réaliser un dispositif permettant de pallier aux problèmes cités et d'améliorer les dispositifs connus de l'état de la technique. En particulier, l'invention se propose de réaliser un dispositif de commande d'équipement rapide, fiable, peu coûteux et qui garantisse la proximité de l'utilisateur sans pour autant nécessiter de contact mécanique, électrique ou optique.

L'émetteur d'ordres selon l'invention est caractérisé par la partie caractérisante de la revendication 1.

Différents modes de réalisation de l'émetteur d'ordres sont définis par les revendications dépendantes 2 et 3.

Le récepteur d'ordres selon l'invention est caractérisé par la partie caractérisante de la revendication 4.

Différents modes de réalisation du récepteur d'ordres sont définis par les revendications dépendantes 5 et 6.

Le dispositif de commande et/ou de configuration d'équipement selon l'invention est caractérisé par la partie caractérisante de la revendication 7.

Différents modes de réalisation du dispositif selon l'invention sont définis par les revendications dépendantes 8 à 10.

Le dessin annexé représente, à titre d'exemples, deux modes de réalisation du dispositif selon l'invention.
La figure 1 est une vue schématique d'un premier mode de réalisation du dispositif de commande selon l'invention.
La figure 2 est une vue schématique des moyens d'alimentations de l'émetteur selon une variante du premier mode de réalisation du dispositif de commande selon l'invention.
La figure 3 est une vue schématique d'un deuxième mode de réalisation du dispositif de commande selon l'invention.

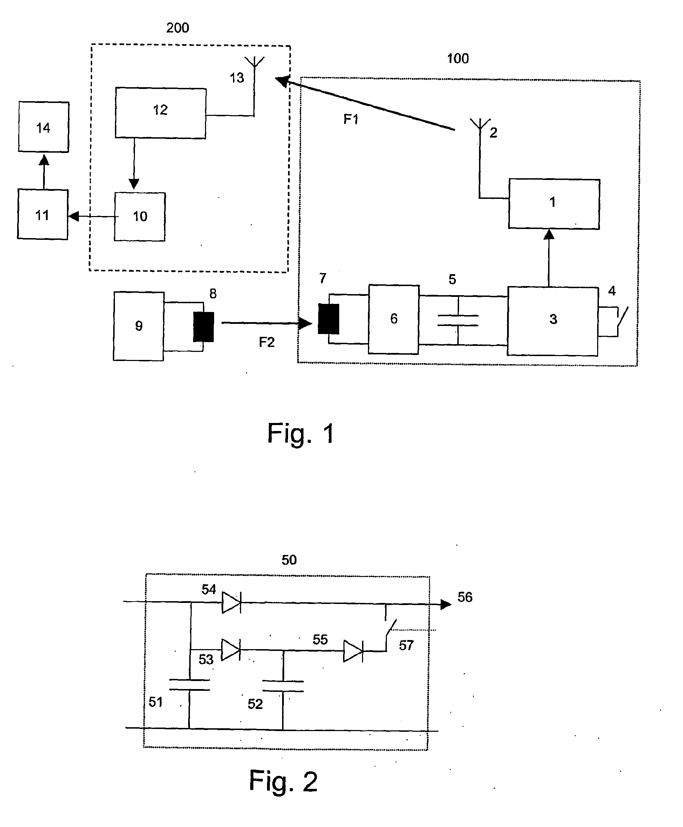

La figure 1 représente un dispositif de commande à distance permettant d'activer un actionneur 11 commandant un équipement 14 d'un bâtiment tel qu'un élément de fermeture, d'occultation ou de protection solaire, ou par exemple une alarme. Le dispositif de commande comprend en plus de l'actionneur 11, un émetteur d'ordres radio-électriques 100, un récepteur d'ordres radio-électriques 200 et un montage oscillateur 9 relié à une bobine 8 créant dans son voisinage un champ électromagnétique.

Les ordres reçus par le récepteur 200 sont destinés à activer l'actionneur 11 entraînant l'équipement 14, ou encore à configurer l'équipement.

L'émetteur d'ordres 100 est de type nomade. Il comprend un élément 1 d'émission de signaux radio-électriques, relié à une antenne 2 permettant l'émission d'ordres radio-électriques à une fréquence porteuse F1 de 433 MHz. Les ordres radio-électriques sont modulés en amplitude. Il est à noter que la fréquence porteuse F1 peut être différente. En effet, elle peut se situer par exemple dans n'importe quelle bande autorisée UHF ou VHF, par exemple 868 MHz ou 2.4 GHz. Les ordres radio-électriques peuvent aussi être modulés en fréquence ou par toute autre grandeur. L'élément d'émission 1 est relié à une unité de traitement 3 générant des ordres suite à des commandes reçues d'une interface utilisateur telle qu'un clavier 4. L'unité de traitement 3 est raccordée à un dispositif d'alimentation constitué par un condensateur 5. La capacité du condensateur 5 est faible : elle ne confère aucune autonomie à l'émetteur 100. La capacité du condensateur 5 ne lui permet pas de stocker et de fournir l'énergie nécessaire à l'émission d'un ordre complet. Celui-ci joue donc un rôle de stockage tampon de très faible durée, permettant de fournir les pointes de courant absorbées par l'élément d'émission 1 lors de l'envoi d'un ordre radio-électrique ayant une trame discontinue. Une bobine 8 située hors de l'émetteur 100 est alimentée par le montage oscillateur en courant alternatif de fréquence F2 égale à 100 kHz. Elle émet de cette manière un champ magnétique à son voisinage. La bobine 7 placée au voisinage de la bobine 8 capte cette énergie magnétique et la transforme en un signal alternatif qui est redressé par un ensemble redresseur 6 et qui permet alors de charger le condensateur 5 et d'alimenter en particulier l'unité de traitement 3, et autres circuits de l'émetteur 100 dont les fils d'alimentation n'ont pas été représentés pour ne pas surcharger la figure. On obtient de cette façon un transfert d'énergie du montage oscillateur 9 au condensateur 5 assurant l'alimentation de l'émetteur 100. L'émetteur 100 ne peut fonctionner que si la bobine 7 reçoit suffisamment d'énergie magnétique émise par la bobine 8. Ceci impose une proximité entre l'émetteur 100 et la bobine 8 émettant de l'énergie magnétique. Il est à noter que la fréquence F2 peut être différente de 100 kHz mais elle doit être suffisante pour permettre un couplage électromagnétique entre les deux bobines. Il faut enfin noter qu'un condensateur d'accord, non représenté, peut être disposé comme il est connu de l'art antérieur en parallèle sur la bobine réceptrice 7 pour augmenter sa sélectivité au voisinage de la fréquence F2.

Le récepteur d'ordres est de type fixe. Il contient un élément de réception 12 de signaux radio-électriques raccordé à une antenne 13. Cet élément de réception 12 et cette antenne 13 sont prévus pour fonctionner à la même fréquence porteuse F1 que l'élément d'émission 1 de l'émetteur 100. Les signaux reçus par l'élément de réception 12 via l'antenne 13 sont exploités dans une unité de traitement 10, qui active l'actionneur 11 selon les ordres reçus.

La figure 2 illustre une variante de réalisation dans laquelle le condensateur précédent est remplacé par un montage 50. Ce montage 50 comporte principalement deux condensateurs 51 et 52 montés en parallèle et un interrupteur commandé 57 en série avec le condensateur 52. L'intérêt de cette variante est de garantir une réserve d'énergie suffisante pour l'émission d'une commande d'arrêt ou d'une autre commande de sécurité de l'actionneur 11. L'alimentation de l'unité de traitement 3 est assurée par la sortie 56 du montage. En fonctionnement normal, le condensateur 51 de faible capacité sert de tampon d'énergie, et l'interrupteur 57, commandé par une sortie de l'unité de traitement 3, est ouvert. C'est à dire que l'élément d'émission 1 et l'unité de traitement 3 sont alimentés par la bobine 7 via l'ensemble redresseur 6 et le condensateur 51. Par contre, lorsqu'on veut émettre des commandes de sécurité telle que l'arrêt de l'actionneur 11, l'appui sur les touches du clavier 4 permettant ces actions entraîne la fermeture de l'interrupteur commandé 57. De cette manière, l'élément d'émission 1 et l'unité de traitement 3 sont alimentés par le condensateur 52 de forte capacité lors de l'émission de commandes de sécurité. Ainsi, si pour une raison quelconque, le couplage électromagnétique entre les bobines 7 et 8 disparaît après avoir été initié, il reste de l'énergie dans le condensateur 52 pour permettre l'émission de commandes de sécurité.

Le deuxième mode de réalisation du dispositif de commande à distance diffère du précédent en ce que le montage oscillateur 9 et la bobine 8 sont intégrés au récepteur 300. Comme vu précédemment, lorsque la bobine 7 est proche de la bobine 8, il y a transfert d'énergie électromagnétique de la bobine 8 vers la bobine 7. Comme il est connu de l'art antérieur, ce transfert d'énergie peut être détecté au sein même du montage oscillateur 9, par une simple mesure de courant ou de tension. Ce montage oscillateur 9 est relié à l'unité de traitement 10 par une liaison 15. Cette liaison permet l'envoi d'un signal permettant de « réveiller » cette unité de traitement 10 qui a été mise en mode basse consommation. Un même type de liaison peut être utilisé entre le montage oscillateur et l'élément de réception 12.

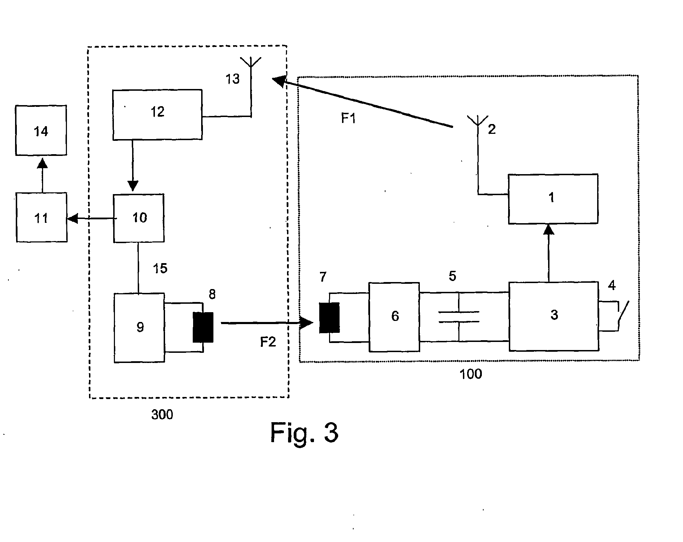

Sur les figures 1 et 3, l'alimentation électrique des éléments 9, 10, 11 et 12 n'est pas représentée. Elle peut se faire à partir du réseau alternatif. Mais ces éléments peuvent aussi être alimentés à l'aide d'un convertisseur AC/DC, ou encore de manière autonome par convertisseur photo-voltaïque.

A des fins de clarté, les dispositifs selon l'invention sont décrits dans le cadre d'une transmission d'ordres unidirectionnelle entre l'émetteur et le récepteur. Cependant, il est bien entendu possible d'utiliser une liaison bidirectionnelle afin de permettre un dialogue d'authentification par diverses techniques de challenge, comme cela est connu de la technique. En effet, permettre l'usage de nombreux types d'émetteurs-récepteurs et de protocoles standards tout en imposant une relation de proximité n'affectant pas ou n'affectant que peu la partie matérielle ou logicielle de ces émetteurs-récepteurs est un intérêt de l'invention.

Le dispositif de commande décrit peut tout aussi bien être utilisé dans un mode de transmission d'ordres ou dans un mode de programmation ou de configuration de l'unité 11 de commande de l'actionneur depuis l'unité mobile, pourvu qu'on impose une relation de proximité lors de cette opération. Préférentiellement, quand un tel mode de proximité est rendu nécessaire par l'application, l'unité 10 contient un code constructeur particulier dit CX qui lui interdit de recevoir des ordres de télécommandes ne possédant pas ce code CX. Seules les télécommandes munies d'une alimentation non autonome comprenant une bobine 7, un ensemble de redressement 6 et un condensateur 5 en remplacement de la pile ou de l'accumulateur contiennent alors ce code CX.

Dans certaines applications, l'actionneur 11 peut être un dispositif électrique de toute nature, destiné à assurer une fonction de sécurité ou de confort dans le bâtiment.

Les dispositifs représentés aux figures 1 et 3 utilisent un émetteur 100 nomade standard dont la pile d'alimentation est remplacée par un dispositif récepteur d'énergie électromagnétique. La faible portée de cet émetteur est garantie par la distance au-delà de laquelle le couplage inductif entre les bobines devient insuffisant. Un avantage important de l'invention est qu'elle permet d'utiliser, pour les dispositifs de commande par proximité, exactement les mêmes cartes électroniques d'émission et de réception que dans le cas des commandes classiques de dispositifs de commande à distance de stores, de volets roulants ou de portes de garages. Il en résulte une économie considérable. Ceci permet de réduire sensiblement les coûts de fabrication de ces cartes.

## Revendications

1. Dispositif de commande et/ou de configuration à distance d'un équipement (14), comprenant
un actionneur (11) permettant d'activer l'équipement (14),
un émetteur d'ordres (100),
un récepteur d'ordres (200 ; 300), et
des moyens d'émission d'énergie de type électromagnétique (9, 8) situés en dehors de l'émetteur d'ordres (100),
**caractérisé en ce que** l'émetteur d'ordres (100) est de type nomade et comprend une interface utilisateur (4), des moyens de génération d'ordres (3), des moyens d'émission d'ordres (1, 2) par voie radio-électrique et des moyens d'alimentation (5, 6, 7 ; 50, 6, 7) en énergie électrique comprenant des moyens (7) de réception d'énergie de type électromagnétique distincts des moyens d'émission d'ordres (1, 2) et coopérant avec les moyens d'émission d'énergie de type électromagnétique (9, 8) pour alimenter en énergie électrique les moyens d'émission d'ordres (1, 2) et les moyens de génération d'ordres (3), et **caractérisé en ce que** la fréquence (F1) de fonctionnement des moyens d'émission d'ordres est au moins cent fois plus importante que la fréquence (F2) de fonctionnement des moyens d'émission d'énergie électromagnétique.

2. Dispositif de commande et/ou de configuration selon la revendication 1, **caractérisé en ce que** les moyens (7) de réception d'énergie de type électromagnétique comprennent une bobine (7).

3. Dispositif de commande et/ou de configuration selon la revendication 1 ou 2, **caractérisé en ce que** les moyens d'alimentation (5, 6, 7 ; 50, 6, 7) comprennent un condensateur principal (51), un condensateur auxiliaire (52) et des moyens (57) permettant à ce dernier d'alimenter les moyens (3) de génération d'ordres et les moyens d'émission d'ordres (1, 2) pour l'émission de certains ordres.

4. Dispositif de commande et/ou de configuration selon l'une des revendications précédentes, **caractérisé en ce que** le récepteur d'ordres (300 est de type fixe et comprend des moyens (12, 13) de réception d'ordres et une unité de commande (10) permettant d'activer l'actionneur (11) commandant l'équipement (14), les moyens d'émission d'énergie de type électromagnétique (9, 8), lesdits moyens d'émission d'énergie de type électromagnétique étant distincts des moyens (12, 13) de réception d'ordres et destinés à coopérer avec les moyens (6, 7) de réception d'énergie de type électromagnétique situés dans l'émetteur (100) pour alimenter en énergie électrique les moyens d'émission d'ordres (1, 2) et les moyens de génération d'ordres (3) de l'émetteur (100).

5. Dispositif de commande et/ou de configuration selon l'une des revendications précédentes, **caractérisé en ce que** les moyens d'émission d'énergie de type électromagnétique (9, 8) comprennent un montage oscillateur (9) et une bobine (8).

6. Dispositif de commande et/ou de configuration selon la revendication 4, **caractérisé en ce que** les moyens d'émission d'énergie (9, 8) sont reliés à l'unité de commande (10) et/ou aux moyens (12, 13) de réception d'ordres par une liaison (15) permettant un envoi d'informations des moyens d'émission d'énergie (9, 8) vers l'unité de commande (10) et/ou vers les moyens (12, 13) de réception d'ordres.

7. Dispositif selon l'une des revendications précédentes, **caractérisé en ce que** l'émetteur d'ordres (100) doit se trouver à une distance des moyens d'émission d'énergie de type électromagnétique (9, 8) inférieure à 1 mètre pour pouvoir recevoir l'énergie nécessaire à la transmission d'un ordre.

## Claims

1. A device for remotely controlling and/or configuring a piece of equipment (14), comprising an actuator (11) making it possible to activate the equipment (14),
a command transmitter (100),
a command receiver (200; 300), and
energy transmitting means of the electromagnetic type (9, 8) situated outside the command transmitter (100),
**characterized in that** the command transmitter (100) is of the nomad type and comprises a user interface (4), means for generating commands (3), means for transmitting commands (1, 2) wirelessly, and power supply means (5, 6, 7; 50, 6, 7) comprising energy receiving means (7) of the electromagnetic type separate from the command transmitting means (1, 2) and cooperating with the electromagnetic energy transmitting means (9, 8) to supply the command transmitting means (1, 2) and the command generating means (3) with electricity, and **characterized in that** the operating frequency (F1) of the command transmitting means is at least 100 times greater than the operating frequency (F2) of the electromagnetic energy transmitting means.

2. The control and/or configuration device according to claim 1, **characterized in that** the electromagnetic energy receiving means (7) comprise a coil (7).

3. The control and/or configuration device according to claim 1 or 2, **characterized in that** the power supply means (5, 6, 7; 50, 6, 7) comprise a main capacitor (51), an auxiliary capacitor (52), and means (57) allowing the latter to power the command generating means (3) and the command transmitting means (1, 2) to transmit certain commands.

4. The control and/or configuration device according to one of the preceding claims, **characterized in that** the command receiver (300) is of the stationary type and comprises means (12, 13) for receiving commands and a control unit (10) making it possible to activate the actuator (11) controlling the equipment (14), the electromagnetic energy transmitting means (9, 8), said electromagnetic energy transmitting means being separate from the command receiving means (12, 13) and designed to cooperate with the energy receiving means (6, 7) of the electromagnetic type situated in the transmitter (100) to supply the command transmitting means (1, 2) and the command generating means (3) of the transmitter (100) with electricity.

5. The control and/or configuration device according to one of the preceding claims, **characterized in that** the electromagnetic energy transmitting means (9, 8) comprise an oscillator assembly (9) and a coil (8).

6. The control and/or configuration device according to claim 4, **characterized in that** the energy transmitting means (9, 8) are connected to the control unit (10) and/or to the command receiving means (12, 13) by a link (15) allowing information to be sent from the energy transmitting means (9, 8) to the control unit (10) and/or to the command receiving means (12, 13).

7. The device according to one of the preceding claims, **characterized in that** the command transmitter (100) must be situated at a distance of less than 1 meter from the electromagnetic energy transmitting means (9, 8) to be able to receive the energy necessary to transmit a command.

## Patentansprüche

1. Fernsteuerungs- und/oder Konfigurationsvorrichtung einer Ausrüstung (14), umfassend
einen Aktuator (11), der es erlaubt, die Ausrüstung (14) zu aktivieren,
einen Wellensender (100),
einen Wellenempfänger (200; 300) und
Mittel zum Senden von Energie elektromagnetischen Typs (9, 8), die sich außerhalb des Wellensender (100) befinden,
**dadurch gekennzeichnet, dass** der Wellensender (100) vom Typ Nomade ist und eine Benutzerschnittstelle (4), Mittel zur Erzeugung von Befehlen(3), Mittel zum Senden von Befehlen (1, 2) auf funkelektrischem Weg und Versorgungsmittel (5, 6, 7; 50, 6, 7) mit elektrischer Energie umfasst, die Mittel (7) zum Empfang von Energie elektromagnetischen Typs umfassen, die sich von den Mitteln zum Senden von Befehlen (1, 2) unterscheiden und mit den Mitteln zum Senden von Energie elektromagnetischen Typs (9, 8) zusammenarbeiten, um die Mittel zum Senden von Befehlen (1, 2) und die Mittel zum Erzeugen von Befehlen (3) mit elektrischer Energie zu versorgen, und **dadurch gekennzeichnet, dass** die Betriebsfrequenz (F1) der Mittel zum Senden von Befehlen mindestens 100 Mal höher ist als die Betriebsfrequenz (F2) der Mittel zum Senden von elektromagnetischer Energie.

2. Steuerungs- und/oder Konfigurationsvorrichtung nach Anspruch 1, **dadurch gekennzeichnet, dass** die Mittel (7) zum Empfang von Energie elektromagnetischen Typs eine Spule (7) umfassen.

3. Steuerungs- und/oder Konfigurationsvorrichtung nach Anspruch 1 oder 2, **dadurch gekennzeichnet, dass** die Versorgungsmittel (5, 6, 7; 50, 6, 7) einen Hauptkondensator (51), einen Hilfskondensator (52) und Mittel (57), die es diesem Letzten erlauben, die Mittel (3) zum Erzeugen von Befehlen und die Mittel zum Senden von Befehlen (1, 2) für das Senden bestimmter Befehle zu versorgen, umfassen.

4. Steuerungs- und/oder Konfigurationsvorrichtung nach einem der vorangehenden Ansprüche, **dadurch gekennzeichnet, dass** der Wellenempfänger (300) starren Typs ist und Mittel (12, 13) zum Empfang von Befehlen und eine Steuereinheit (10) umfasst, die es erlaubt, den Aktuator (11) zu aktivieren, der die Ausrüstung (14) steuert, die Mittel zum Senden von Energie elektromagnetischen Typs (9, 8), wobei sich die Mittel zum Senden von Energie elektromagnetischen Typs von den Mitteln (12, 13) zum Empfang von Befehlen unterscheiden und dazu bestimmt sind, mit den Mitteln (6, 7) zum Empfang von Energie elektromagnetischen Typs zusammenzuarbeiten, die sich im Sender (100) befinden, um die Mittel zum Senden von Befehlen (1, 2) und die Mittel zum Erzeugen von Befehlen (3) des Senders (100) mit elektrischer Energie zu versorgen.

5. Steuerungs- und/oder Konfigurationsvorrichtung nach einem der vorangehenden Ansprüche, **dadurch gekennzeichnet, dass** die Mittel zum Senden von Energie elektromagnetischen Typs (9, 8) eine Oszillatormontage (9) und eine Spule (8) umfassen.

6. Steuerungs- und/oder Konfigurationsvorrichtung nach Anspruch 4, **dadurch gekennzeichnet, dass** die Mittel zum Senden von Energie (9, 8) mit der Steuereinheit (10) und/oder den Mitteln (12, 13) zum Empfang von Befehlen durch eine Verbindung (15) verbunden sind, die ein Senden von Informationen der Mittel zum Senden von Energie (9, 8) zur Steuereinheit (10) und/oder zu den Mitteln (12, 13) zum Empfang von Befehlen erlauben.

7. Vorrichtung nach einem der vorangehenden Ansprüche, **dadurch gekennzeichnet, dass** sich der Wellensender (100) in einem Abstand von den Mitteln zum Senden von Energie elektromagnetischen Typs (9, 8) befinden muss, der kleiner ist 1 Meter, um die zur Übertragung eines Befehls notwendige Energie empfangen zu können.
